# EUROPEAN PATENT APPLICATION

(11) **EP 4 723 737 A1**
(43) Date of publication of application: **08.04.2026**
(21) Application number: 23939737.5
(22) Date of filing: 02.06.2023
(51) Int. Cl.: H04W 36/08, H04W 84/12, H04W 88/12

(54) **SHARING ACCESS POINT, TERMINAL, AND SHARED ACCESS POINT**

(71) Applicant: NTT, Inc., Tokyo 100-8116 (JP)
(72) Inventor: KISHIDA, Akira, Musashino-shi, Tokyo 180-8585 (JP); NAGATSU, Ryo, Musashino-shi, Tokyo 180-8585 (JP); NAGATA, Kengo, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2023/020696
(87) International publication number: WO 2024/247266

(57) **Abstract**

In a sharing access point according to an embodiment, a management unit sets one of a plurality of links from a terminal as an anchor link, corresponding to reception of a handover request for requesting switching of a shared access point to serve as a connection destination for one or more of the plurality of links from the terminal. The management unit switches the shared access point to serve as the connection destination for a switching target link among the links other than the anchor link in a state of maintaining wireless connection with the shared access point to serve as the connection destination in the anchor link.

## Description

### Technical Field

Embodiments relate to a sharing access point, a terminal and a shared access point.

### Background Art

A wireless local area network (LAN) is known as a system that wirelessly connects an access point (AP) and a terminal. In the wireless LAN, the terminal performs association processing with the AP to establish wireless connection with the AP. In a case where a connection destination is switched from the AP to which the terminal is wirelessly connected to another AP due to movement of the terminal, disassociation processing of disconnecting the wireless connection to the wirelessly connected AP is performed, and association processing is performed with the AP to serve as a new connection destination.

In addition, in IEEE802.11be being formulated as a successor standard of IEEE802.11ax, a terminal establishes a plurality of links with an AP, and can perform multi-link communication for transmitting and receiving data to and from the AP via each of the plurality of links. In the multi-link communication, in switching of an AP to serve as a connection destination to be wirelessly connected, wireless connection to the wirelessly connected AP is collectively cut off in the plurality of links, and the plurality of links is collectively connected to the AP to serve as a new connection destination.

In a communication system in which the terminal performs the multi-link communication, in a case where a handover operation (switching operation) of switching the AP as a connection destination is performed for one or more of the plurality of links, it is required to effectively prevent occurrence of instantaneous interruption in which wireless connection is cut off in all of the plurality of links. That is, in the handover operation, it is required to appropriately switch the AP to serve as a connection destination for a switching target link to be switched among the plurality of links without causing the instantaneous interruption.

### Citation List

### Non Patent Literature

Non Patent Literature 1: IEEE802.11be D3.0,"35.3 Multi-link operation",p479-p586,January 2023

### Summary of Invention

### Technical Problem

An object of the present invention is to provide a sharing access point, a terminal and a shared access point that appropriately switch an access point to serve as a connection destination for a switching target link among a plurality of links from a terminal without causing instantaneous interruption.

### Solution to Problem

In an embodiment of the present invention, a sharing access point includes a management unit, and the management unit sets, in a state in which each of a plurality of links from a terminal is wirelessly connected to one of a plurality of shared access points, one of the plurality of links as an anchor link, corresponding to reception of a handover request for requesting switching of a shared access point to serve as a connection destination for one or more of the plurality of links from the terminal. The management unit switches the shared access point to serve as a connection destination for a switching target link to be switched among the links other than the anchor link in a state of maintaining the wireless connection with the shared access point to serve as a connection destination in the anchor link.

### Advantageous Effects of Invention

According to the present invention, it is possible to provide a sharing access point, a terminal and a shared access point that appropriately switch an access point to serve as a connection destination for a switching target link among a plurality of links from a terminal without causing instantaneous interruption.

### Brief Description of Drawings

Fig. 1 is a block diagram illustrating an example of a configuration of a communication system according to an embodiment.
Fig. 2 is a block diagram illustrating an example of a hardware configuration of a sharing AP according to the embodiment.
Fig. 3 is a block diagram illustrating an example of a hardware configuration of a shared AP according to the embodiment.
Fig. 4 is a block diagram illustrating an example of a hardware configuration of a terminal according to the embodiment.
Fig. 5 is a block diagram illustrating an example of a functional configuration of the sharing AP according to the embodiment.
Fig. 6 is a block diagram illustrating an example of a functional configuration of the shared AP according to the embodiment.
Fig. 7 is a block diagram illustrating an example of a functional configuration of the terminal according to the embodiment.
Fig. 8 is a flowchart illustrating an example of processing in a handover operation performed by the communication system according to the embodiment.
Fig. 9 is a schematic diagram illustrating an example of the handover operation in the communication system according to the embodiment.
Fig. 10 is a sequence diagram illustrating an example of communication processing based on a multi-AP connection method performed at the time of handover operation in the communication system according to the embodiment.

### Description of Embodiments

Hereinafter, embodiments will be described with reference to the drawings. Note that in the following description, components having the same function and configuration are denoted by the same reference numerals.

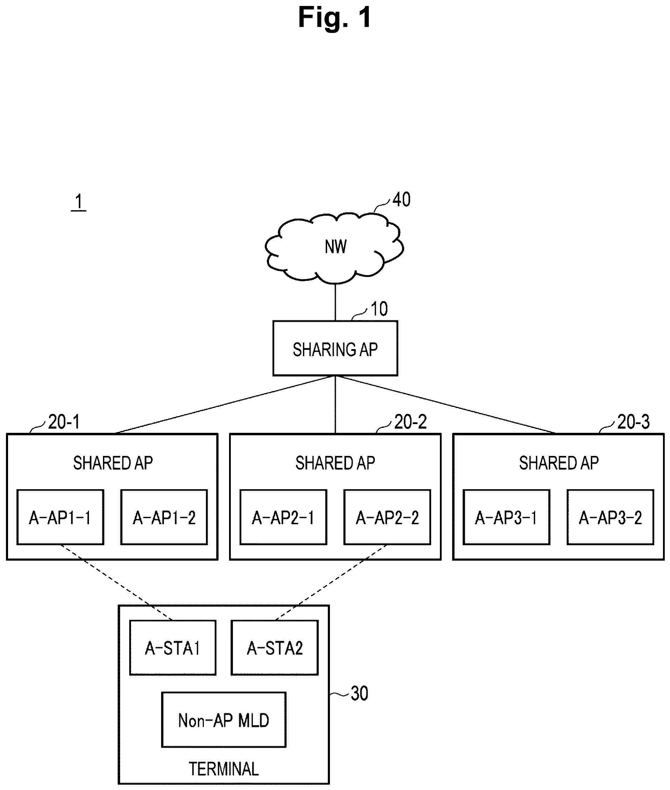

Fig. 1 is a block diagram illustrating an example of a configuration of a communication system according to an embodiment. As illustrated in Fig. 1, a communication system 1 includes a sharing access point (AP) 10, shared APs 20-1, 20-2, and 20-3, and a terminal 30. The sharing AP 10 is connected to a network 40.

The sharing AP 10 is, for example, an access point (AP) of a wireless LAN. The sharing AP 10 is configured to perform wired communication or wireless communication with a server (not illustrated) on the network 40. The sharing AP 10 is configured to perform wireless communication or wired communication with each of the shared APs 20-1, 20-2, and 20-3.

Each of the shared APs 20-1 to 20-3 is, for example, an access point (AP) of the wireless LAN. The shared APs 20-1 to 20-3 are respectively installed at positions physically separated from one another, and the shared APs 20-1 to 20-3 have communicable areas that are different from one another. Furthermore, the communicable area of each of the shared APs 20-1 to 20-3 may partially overlap the communicable are of another shared AP. Each of the shared APs 20-1 to 20-3 is configured to perform the wireless communication with the terminal 30. Communication between each of the shared APs 20-1 to 20-3 and the terminal 30 conforms to, for example, the IEEE802.11 standard. Note that the shared APs 20-1 to 20-3 have configurations equivalent to one another. Hereinafter, the shared APs 20-1 to 20-3 may be described as the shared AP(s) 20 unless otherwise distinguished.

Each of the shared APs 20 includes a plurality of affiliated APs. In the example of Fig. 1, two affiliated APs (A-APs) are provided in each of the shared APs 20. Then, an A-AP 1-1 and an A-AP 1-2 are provided in the shared AP 20-1, an A-AP 2-1 and an A-AP 2-2 are provided in the shared AP 20-2, and an A-AP 3-1 and an A-AP 3-2 are provided in the shared AP 20-3.

The terminal 30 is a wireless terminal such as a smartphone and a personal computer (PC). In the example of Fig. 1, the terminal 30 is located within a communicable area of the shared APs 20-1 and 20-2, but is not located within the communicable area of the shared AP 20-3. The terminal 30 is configured to communicate with a server on the network 40 by communicating with the sharing AP 10 via at least one shared AP 20 in the shared APs 20-1 to 20-3. That is, the terminal 30 is connected to the sharing AP 10 via at least one shared AP 20 in the shared APs 20-1 to 20-3. The connection method between the terminal 30 and the sharing AP 10 as described above is also referred to as a "multi-AP connection method".

Further, the terminal 30 is a wireless terminal that performs wireless communication using a plurality of channels (links). The terminal 30 includes a non-AP MLD and a plurality of affiliated STAs (stations). In the example of Fig. 1, the terminal 30 includes an A-STA 1 and an A-STA 2 as the affiliated STAs. The non-AP MLD is a multi-link device (MLD) on the side of the terminal 30 that manages a state of a link from each of the A-STA 1 and the A-STA 2 that are subordinate affiliated STAs. The non-AP MLD also performs processing for establishing connection between the sharing AP 10 and the terminal 30 in the multi-AP connection method.

In the multi-AP connection method, each of connection (transmission path) via the shared AP 20-1, connection (transmission path) via the shared AP 20-2, and connection (transmission path) via the shared AP 20-3 can be established between the AP MLD of the sharing AP 10 and the non-AP MLD of the terminal 30. In other words, each of the shared APs 20-1 to 20-3 is a candidate for a via-destination in data exchange between the sharing AP 10 and the terminal 30. Then, each of the A-STA 1 and the A-STA 2 of the terminal 30 executes data exchange with the sharing AP 10 via one of the shared APs 20-1 to 20-3 that are candidates for a via-destination.

In the example of Fig. 1, in the data exchange between the sharing AP 10 and the non-AP MLD of the terminal 30, the link established between the A-STA 1 and the shared AP 20-1 and the link established between the A-STA 2 and the shared AP 20-2 are used. Note that, in the following description, the shared APs 20-1 to 20-3 are also referred to as access points "belonging" to the sharing AP 10 in the multi-AP connection method.

Further, in each of the plurality of shared APs 20, only one of the plurality of links (wireless links) from the terminal 30 can be wirelessly connected to each of the plurality of affiliated APs. In the example of Fig. 1, the link from the A-STA 1 is wirelessly connected to the A-AP 1-1 of the shared AP 20-1, and the link from the A-STA 2 is wirelessly connected to the A-AP 2-2 of the shared AP 20-2. Since a plurality of affiliated APs is provided in each of the shared APs 20, it is possible to wirelessly connect two or more of the plurality of links from the terminal 30 to one shared AP. For example, it is possible to wirelessly connect two links from the terminal 30 to the one shared AP 20-1 by wirelessly connecting the link from the A-STA 1 to the A-AP 1-1 and wirelessly connecting the link from the A-STA 2 to the A-AP 1-2.

The sharing AP 10, the shared APs 20-1 to 20-3, and the terminal 30 have, for example, a wireless communication function based on an open systems interconnection (OSI) reference model. In the OSI reference model, the wireless communication function is divided into seven layers (a first layer: a physical layer, a second layer: a data link layer, a third layer: a network layer, a fourth layer: a transport layer, a fifth layer: a session layer, a sixth layer: a presentation layer, and a seventh layer: an application layer). The data link layer includes a logical link control (LLC) sublayer and a media access control (MAC) sublayer.

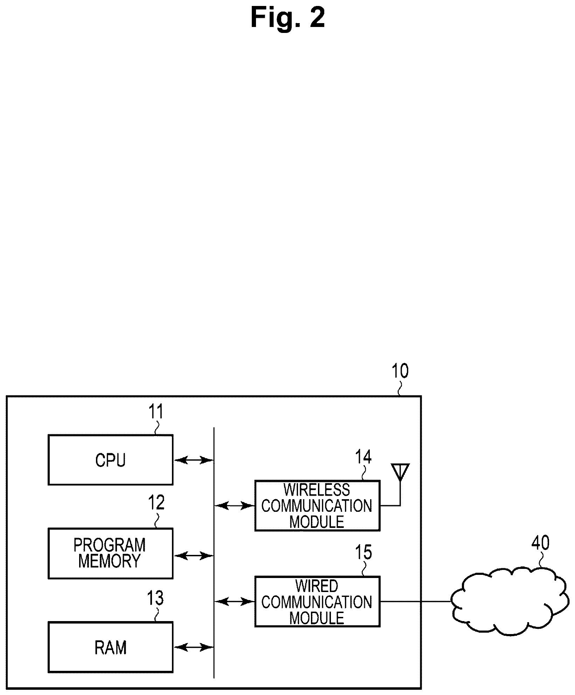

Fig. 2 is a block diagram illustrating an example of a hardware configuration of the sharing AP according to the embodiment. Fig. 2 illustrates an example of a case where the sharing AP 10 performs the wireless communication with each of the shared APs 20. As illustrated in Fig. 2, the sharing AP 10 includes, for example, a central processing unit (CPU) 11, a read only memory (ROM) 12, a random access memory (RAM) 13, a wireless communication module 14, and a wired communication module 15.

The CPU 11 is a processing circuit that controls an entire operation of the sharing AP 10. The ROM 12 is a nonvolatile semiconductor memory, for example. The ROM 12 stores a program for controlling the sharing AP 10, and data. The RAM 13 is, for example, a volatile semiconductor memory. The RAM 13 is used as a working area of the CPU 11. The wireless communication module 14 is a circuit used to transmit and receive data with a wireless signal. The wireless communication module 14 is connected to an antenna. The wired communication module 15 is a circuit used to transmit and receive data with a wired signal. The wireless communication module 14 can be connected (wirelessly connected) to the shared APs 20-1 to 20-3. The wired communication module 15 is connected to the network 40.

Note that, in a case where the sharing AP 10 performs the wired communication with each of the shared APs 20, the wireless communication module 14 is not provided in the sharing AP 10. In this case, the wired communication module 15 can be connected to the network 40 and can be connected (wired-connected) to the shared APs 20-1 to 20-3.

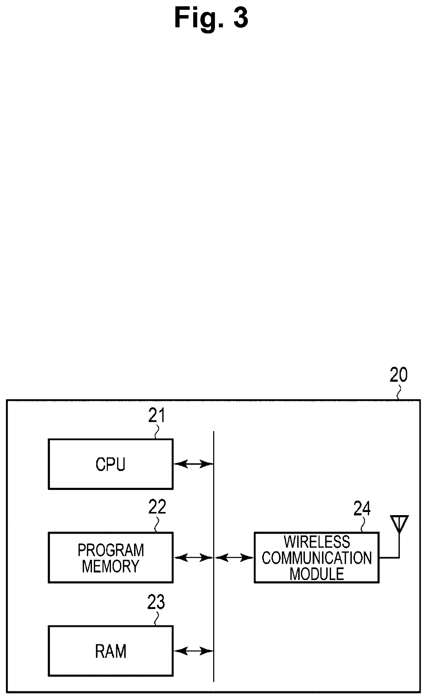

Fig. 3 is a block diagram illustrating an example of a hardware configuration of the shared AP according to the embodiment. Fig. 3 illustrates an example of a case where the shared AP 20 performs the wireless communication with the sharing AP 10. As illustrated in Fig. 3, the shared AP 20 includes, for example, a CPU 21, a ROM 22, a RAM 23, and a wireless communication module 24.

The CPU 21 is a processing circuit that controls an entire operation of the shared AP 20. The ROM 22 is a nonvolatile semiconductor memory, for example. The ROM 22 stores a program for controlling the shared AP 20, and data. The RAM 23 is, for example, a volatile semiconductor memory. The RAM 23 is used as a working area of the CPU 21. The wireless communication module 24 is a circuit used to transmit and receive data with a wireless signal. The wireless communication module 24 is connected with an antenna. The wireless communication module 24 can be connected (wirelessly connected) to the sharing AP 10 and the terminal 30.

Note that, in a case where the shared AP 20 performs the wired communication with the sharing AP 10, a wired communication module (not illustrated) is further provided in the shared AP. In this case, the wireless communication module 24 can be connected to the terminal 30, and the wired communication module can be connected (wired connected) to the sharing AP 10.

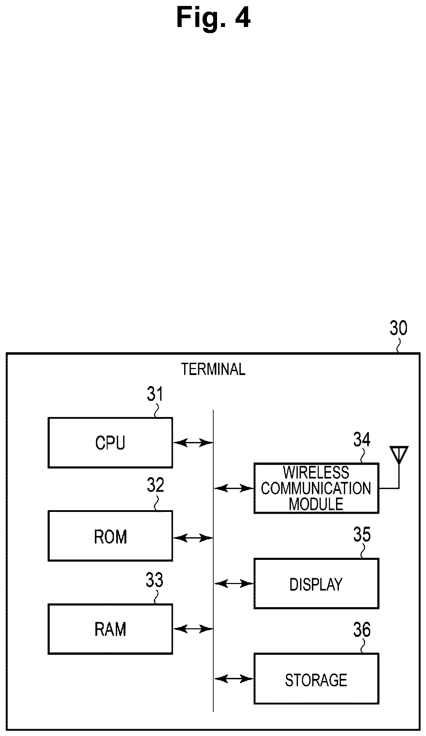

Fig. 4 is a block diagram illustrating an example of a hardware configuration of the terminal according to the embodiment. As illustrated in Fig. 4, the terminal 30 includes, for example, a CPU 31, a ROM 32, a RAM 33, a wireless communication module 34, a display 35, and a storage 36.

The CPU 31 is a processing circuit that controls an entire operation of the terminal 30. The ROM 32 is a nonvolatile semiconductor memory, for example. The ROM 32 stores a program for controlling the terminal 30, and data. The RAM 33 is, for example, a volatile semiconductor memory. The RAM 33 is used as a working area of the CPU 31. The wireless communication module 34 is a circuit used to transmit and receive data with a wireless signal. The wireless communication module 34 is connected with an antenna. The display 35 is, for example, a liquid crystal display (LCD) or an electro luminescence (EL) display. The display 35 displays a graphical user interface (GUI) corresponding to application software, or the like. The storage 36 is a nonvolatile storage device. The storage 36 stores system software of the terminal 30, and the like.

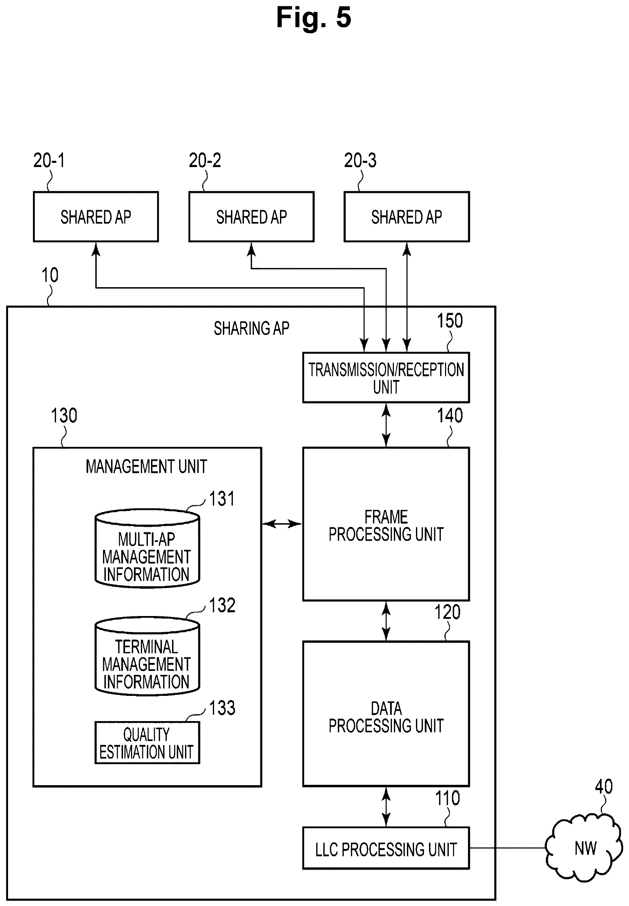

Fig. 5 is a block diagram illustrating an example of a functional configuration of the sharing AP according to the embodiment. As illustrated in Fig. 5, the sharing AP 10 functions as a computer including an LLC processing unit 110, a data processing unit 120, a management unit 130, a frame processing unit 140, and a transmission/reception unit 150. The LLC processing unit 110 is a functional block that executes processing corresponding to the LLC sublayer of the second layer and the third layer to the seventh layer. The data processing unit 120, the management unit 130, and the frame processing unit 140 are functional blocks that execute processing corresponding to the MAC sublayer of the second layer. Furthermore, in the case where the sharing AP 10 performs the wireless communication with each of the shared APs 20, the transmission/reception unit 150 is a functional block that executes processing corresponding to the first layer.

The LLC processing unit 110 adds, for example, a destination service access point (DSAP) header, a source service access point (SSAP) header, and the like to the data received from the network 40 to generate an LLC packet. Then, the LLC processing unit 110 inputs the generated LLC packet to the data processing unit 120. Further, the LLC processing unit 110 extracts data from the LLC packet input from the data processing unit 120. Then, the LLC processing unit 110 transmits the extracted data to the network 40.

The data processing unit 120 outputs the LLC packet input from the LLC processing unit 110 to the frame processing unit 140. Further, the data processing unit 120 outputs the LLC packet input from the frame processing unit 140 to the LLC processing unit 110.

The management unit 130 controls establishment of the connection (logical wireless connection) between the sharing AP 10 and the non-AP MLD of the terminal 30 in the multi-AP connection method. In the multi-AP connection method, data exchange is performed between the sharing AP 10 and the terminal 30 in a state where each of the links (wireless links) from the A-STA 1 and the A-STA 2, which are the affiliated STAs of the terminal 30, is wirelessly connected to any one of the shared APs 20-1 to 20-3. The management unit 130 controls the establishment of wireless connection with the shared AP 20 to serve as a connection destination for each of the plurality of links from the terminal 30, that is, for each of the links from the A-STA 1 and the A-STA 2.

Further, in the multi-AP connection method, in a case where the terminal 30 moves from the communicable area of a certain shared AP 20 to the communicable area of another certain shared AP 20, or the like, a handover operation of switching the shared AP 20 to serve as the connection destination is performed for one or more of the plurality of links from the terminal 30. In the handover operation, the management unit 130 controls switching of the shared AP 20 to serve as the connection destination of the wireless connection for each of switching target links to be switched to the connection destination. In the handover operation, regarding the switching target link, the wireless connection with the shared AP 20 that is wirelessly connected in real time is disconnected, and the wireless connection is established with the shared AP 20 to serve as a new connection destination.

In the handover operation, the management unit 130 controls switching of the connection destination of each of the switching target links to a state in which instantaneous interruption, where the wireless connection with the shared AP 20 is cut off in all of the plurality of links from the terminal 30, does not occur. Note that, in the following description, for each of the plurality of links from the terminal 30, processing of establishing the wireless connection with one of the shared APs 20 is also referred to as "association processing", and processing of cutting off the wireless connection with the wirelessly connected shared AP 20 is also referred to as "disassociation processing".

In addition, the management unit 130 stores multi-AP management information 131 and terminal management information 132. The multi-AP management information 131 includes information regarding the access points (that is, the sharing AP 10 and the shared APs 20-1 to 20-3) used for the multi-AP connection method. The information regarding the access points used for the multi-AP connection method includes, for example, an identifier, a frequency band, operation parameters, and the like. Furthermore, the information regarding the shared AP 20 may include information regarding each of the plurality of affiliated APs provided in the shared AP 20. In this case, the identifier, the frequency band, the operation parameters, and the like for each of the plurality of affiliated APs provided in the shared AP 20 are included in the multi-AP management information 131.

The identifier is, for example, an identifier of a corresponding AP. The identifier may include a MAC address of the corresponding AP. The frequency band includes information indicating a frequency band used by the corresponding AP in the multi-AP connection method. As the frequency band, for example, a 2.4 GHz band, a 5 GHz band, a 6 GHz band, a 45 GHz band, a 60 GHz band, or the like can be applied. Each frequency band may include a plurality of channels. In this case, the multi-AP management information 131 may include channel information instead of or in addition to the frequency band information.

The operation parameter includes, for example, CWmin, CWmax, an arbitration interframe space (AIFS), and a transmission opportunity (TXOP) Limit. The CWmin and the CWmax indicate a minimum value and a maximum value of a contention window, respectively. The contention window is a parameter used to calculate backoff that is a transmission wait time for collision avoidance. The AIFS is a fixed transmission wait time set for each traffic access category. The traffic access categories include, for example, "voice (VO)", "video (VI)", "best effort (BE)", "background (BK)", and "low latency (LL)". The TXOP Limit indicates an upper limit value of a channel occupancy period TXOP.

The terminal management information 132 stores information regarding the terminal 30 connected to the sharing AP 10 by the multi-AP connection method. Specifically, the terminal management information 132 includes an identifier of the non-AP MLD of the terminal 30 and respective identifiers of the affiliated STA of the terminal 30 and the shared AP 20 passed through in the connection with the terminal 30. The identifier of the non-AP MLD of the terminal 30 may include a MAC address of the non-AP MLD. Furthermore, the identifier of the affiliated STA passed through in the connection with the terminal 30 may include a MAC address of the affiliated STA, and the identifier of the shared AP 20 passed through in the connection with the terminal 30 may include the MAC address of the shared AP 20.

Furthermore, the terminal management information 132 may include the identifier of the affiliated AP passed through in the connection with the terminal 30 as the information regarding the shared AP 20 passed through in the connection with the terminal 30. The identifier of the affiliated AP passed through in the connection with the terminal 30 may include the MAC address of the affiliated AP.

Data from the data processing unit 120 is input to the frame processing unit 140 as an LLC packet. In the case where the sharing AP 10 performs the wireless communication with each of the shared APs 20, the frame processing unit 140 adds a MAC header to the LLC packet input from the LLC processing unit 110 to generate a MAC frame. Then, the frame processing unit 140 outputs the generated MAC frame to the transmission/reception unit 150. Furthermore, in the case where the sharing AP 10 performs the wireless communication with each of the shared APs 20, the frame processing unit 140 extracts the LLC packet from the MAC frame input from the transmission/reception unit 150. Then, the frame processing unit 140 outputs the extracted LLC packet to the data processing unit 120. Note that, in the following description, the MAC frame including data is also referred to as a "data frame".

In a case where the sharing AP 10 performs the wired communication with each of the shared APs 20, the frame processing unit 140 outputs the LLC packet input from the data processing unit 120 to the transmission/reception unit 150. Further, the frame processing unit 140 outputs the LLC packet input from the transmission/reception unit 150 to the data processing unit 120.

Further, management information is input from the management unit 130 to the frame processing unit 140, and the frame processing unit 140 outputs the management information from the management unit 130 to the transmission/reception unit 150. The management information includes notification information to be notified to either the shared AP 20 or the terminal 30, control information regarding control of operation of either the shared AP 20 or the terminal 30, and the like. Furthermore, control information regarding control of operation of the affiliated AP in each of the shared APs 20 and the like may be included in the management information. In addition, the management information can include the multi-AP management information 131 and the terminal management information 132 described above. In the case where the sharing AP 10 performs the wireless communication with each of the shared APs 20, the frame processing unit 140 generates a management frame that is a MAC frame including the management information from the management unit 130, and outputs the generated management frame to the transmission/reception unit 150.

Furthermore, data and the management information are input from the transmission/reception unit 150 to the frame processing unit 140. The management information input from the transmission/reception unit 150 includes the notification information notified from either the shared AP 20 or the terminal 30, and the like. In a case where data is input from the transmission/reception unit 150 as a data frame or an LLC packet, the frame processing unit 140 outputs the input data to the data processing unit 120. Further, in the case where the management information is input from the transmission/reception unit 150, the frame processing unit 140 outputs the input notification information and the like to the management unit 130. In the case where the sharing AP 10 performs the wireless communication with each of the shared APs 20, the management frame that is a MAC frame including the management information is input from the transmission/reception unit 150 to the frame processing unit 140, and the frame processing unit 140 outputs the management information included in the management frame from the transmission/reception unit 150 to the management unit 130.

The transmission/reception unit 150 transmits and receives the data, the management information, and the like to and from each of the belonging shared APs 20 by the wireless communication or the wired communication. In the case where the sharing AP 10 performs the wireless communication with each of the shared APs 20, the transmission/reception unit 150 includes one or more wireless signal processing units. Then, each of the wireless signal processing units of the transmission/reception unit 150 adds a preamble or the like to the MAC frame (the data frame, the management frame, and the like) input from the frame processing unit 140 to generate a wireless frame, and converts the generated wireless frame into a wireless signal. Then, each of the wireless signal processing units transmits (radiates) the converted wireless signal via an antenna. Conversion processing from the wireless frame to the wireless signal includes, for example, convolutional encoding processing, interleave processing, subcarrier modulation processing, inverse fast Fourier transform processing, OFDM modulation processing, and frequency conversion processing.

Each of the wireless signal processing units of the transmission/reception unit 150 converts the wireless signal received from any one of the shared APs 20 via an antenna into the wireless frame. Conversion processing from the wireless signal to the wireless frame includes, for example, frequency conversion processing, OFDM demodulation processing, fast Fourier transform processing, subcarrier demodulation processing, deinterleave processing, and Viterbi decoding processing. Each of the wireless signal processing units extracts the MAC frame from the converted wireless frame, and outputs the extracted MAC frame to the frame processing unit 140.

In one example, one wireless signal processing unit is provided in the transmission/reception unit 150 corresponding to each of the three shared APs 20-1 to 20-3. Then, the data and the like to be transmitted to the shared AP 20-1 are input to the wireless signal processing unit corresponding to the shared AP 20-1, the data and the like to be transmitted to the shared AP 20-2 are input to the wireless signal processing unit corresponding to the shared AP 20-2, and the data and the like to be transmitted to the shared AP 20-3 are input to the wireless signal processing unit corresponding to the shared AP 20-3, from the frame processing unit 140. Furthermore, in another example, in the transmission/reception unit 150, one wireless signal processing unit is provided corresponding to each of the shared APs 20-1 to 20-3, and a wireless signal processing unit that transmits the management information to the plurality of shared APs 20 is provided separately from the above-described three wireless signal processing units. Note that, in a case where a plurality of wireless signal processing units is provided in the transmission/reception unit 150 as in the above-described example, the plurality of wireless signal processing units is configured to transmit and receive the wireless signals to and from using frequency bands or channels different from one another.

In the case where the sharing AP 10 performs the wired communication with each of the shared APs 20, the transmission/reception unit 150 is connected to each of the belonging shared APs 20-1 to 20-3 via a wired network, and transmits and receives data, the management information, and the like to and from each of the shared APs 20-1 to 20-3 via the wired network. In this case, the transmission/reception unit 150 includes a network interface of the wired network.

The management unit 130 performs allocation (mapping) of traffic transmitted and received between the sharing AP 10 and the terminal 30 in cooperation with the belonging shared APs 20 and the non-AP MLD of the terminal 30. As a result, the traffic such as data transmitted from the sharing AP 10 is allocated to the belonging shared APs 20-1 to 20-3 and the plurality of links from the terminal 30. The management unit 130 instructs the frame processing unit 140 in regard with the transmission destination of the traffic on the basis of an allocation result for the traffic. Then, the frame processing unit 140 causes the transmission/reception unit 150, toward the shared AP 20 corresponding to the instruction from the management unit 130, to transmit the traffic. For example, the traffic allocated to the link having the shared AP 20-1 as the connection destination is transmitted from the transmission/reception unit 150 of the sharing AP 10 to the shared AP 20-1 on the basis of the instruction from the management unit 130. Note that the management unit 130 may allocate the traffic on the basis of a traffic identifier (TID) associated with the access category.

Further, the management unit 130 includes a quality estimation unit 133. The terminal 30 or each of the shared APs 20 is provided with a quality measuring unit that measures communication quality of each of the plurality of links (wireless links) from the terminal 30. In the sharing AP 10, the transmission/reception unit 150 receives a measurement result regarding the communication quality of each of the plurality of links, and the frame processing unit 140 outputs the measurement result received by the transmission/reception unit 150 to the quality estimation unit 133 of the management unit 130. Then, the quality estimation unit 133 estimates the quality of each of the plurality of links from the terminal 30 on the basis of the measurement result in the quality measuring unit. In one example, for each of the plurality of links, received electric power in reception of the wireless signal is measured. Then, the quality estimation unit 133 estimates the quality of each of the plurality of links on the basis of a temporal variation of the received electric power.

In the communication system 1, a handover request for requesting switching of the shared AP 20 to serve as the connection destination for one or more of the plurality of links from the terminal 30 is transmitted from the terminal 30. The transmission/reception unit 150 of the sharing AP 10 receives the handover request transmitted via any one of the shared APs 20. The management unit 130 causes the belonging shared AP 20 and the terminal 30 to execute a handover operation, corresponding to reception of the handover request from the terminal 30. In a state where the handover operation is being performed, the management unit 130 causes the transmission/reception unit 150 to transmit the management information and the like to be used to control the handover operation to the belonging shared AP 20. Further, the management unit 130 manages the start and end of the handover operation.

The management unit 130 sets the switching target link to be switched to the connection destination among the plurality of links from the terminal 30 on the basis of the received handover request. At this time, for example, the link in which the communication quality estimated by the quality estimation unit 133 falls below a reference level is set as a switching target link. In one example, the link in which the received electric power becomes equal to or less than a threshold is set as the switching target link. In the handover operation, only some of the plurality of links are set as the switching target links or all of the plurality of links are set as the switching target links in accordance with a situation.

In addition, the management unit 130 sets one of the plurality of links from the terminal 30 as a handover anchor link, corresponding to reception of the handover request from the terminal 30. In the following description, the handover anchor link is simply referred to as an "anchor link". As the anchor link, for example, the link having the most stable communication quality estimated among the plurality of links is set. In one example, the link with the most stable received electric power is set as the anchor link. At this time, for each of the plurality of links, it is determined that the stability of the received electric power is higher as an electric power value of the received electric power is higher, and it is determined that the stability of the received electric power is higher as a temporal variation of the received electric power is smaller. The anchor link may be set from among the switching target links, or may be set from among links other than the switching target links. Note that, in a case where only some of the plurality of links are set as the switching target links, it is favorable that the anchor link is set with priority from links other than the switching target links. Further, the link to serve as the anchor link may be sequentially changed while the handover operation is performed. In one example, after the switching of the connection destination is completed for the switching target link other than the anchor link, the anchor link is changed to a corresponding one of the links for which the switching of the connection destination is completed.

The management unit 130 causes the transmission/reception unit 150 to transmit setting information regarding the anchor link to the belonging shared AP 20. Then, the management unit 130 controls the handover operation by the shared AP 20 and the terminal 30, corresponding to the setting information of the anchor link. At this time, the management unit 130 switches the shared AP 20 to serve as the connection destination for the switching target link other than the anchor link in a state of maintaining the wireless connection with the shared AP 20 to serve as the connection destination in the anchor link. Furthermore, in a case where the anchor link is the switching target link, the management unit 130 switches the shared AP 20 to serve as the connection destination for the anchor link on the basis of completion of switching of the shared AP 20 to serve as the connection destination for all the switching target links other than the anchor link.

The management unit 130 of the sharing AP 10 manages the start and end of the switching operation of the shared AP 20 to serve as the connection destination for each of the switching target links. The management unit 130 receives, from the corresponding shared AP 20, notification information for notifying completion of the disassociation processing for disconnecting the wireless connection with the wirelessly connected shared AP 20 for each of the switching target links. Further, the management unit 130 receives, from the corresponding shared AP 20, notification information for notifying completion of the association processing for establishing the wireless connection with the shared AP 20 to serve as a new connection destination for each of the switching target links.

The management unit 130 determines that the switching operation of the connection destination is completed on the basis of reception of the notification information of completion of the disassociation processing and the notification information of completion of the association processing for each of the switching target links. Furthermore, in a case where the anchor link is to be switched, the management unit 130 starts the switching operation of the shared AP 20 to serve as the connection destination of the anchor link on the basis of reception of the notification information of completion of the disassociation processing and the notification information of completion of the association processing for all the switching target links other than the anchor link.

Further, the management unit 130 allocates (maps) the traffic transmitted and received to and from the terminal 30 via the shared AP 20 to the anchor link while the shared AP 20 to serve as the connection destination is switched for the switching target link other than the anchor link, corresponding to the setting of the anchor link. Therefore, the traffic is allocated to the shared AP 20 to which the anchor link is wirelessly connected while the connection destination switching operation is performed for the switching target link other than the anchor link.

Further, the management unit 130 allocates the traffic to be transmitted and received to and from the terminal 30 for the links other than the anchor link among the plurality of links while the connection destination switching operation is performed for the anchor link. Therefore, the traffic is not allocated to the anchor link while the connection destination switching operation is performed for the anchor link. Further, when the connection destination switching operation for the anchor link is completed and the handover operation is completed, the management unit 130 allocates the traffic transmitted and received to and from the terminal 30 to all of the plurality of links including the anchor link.

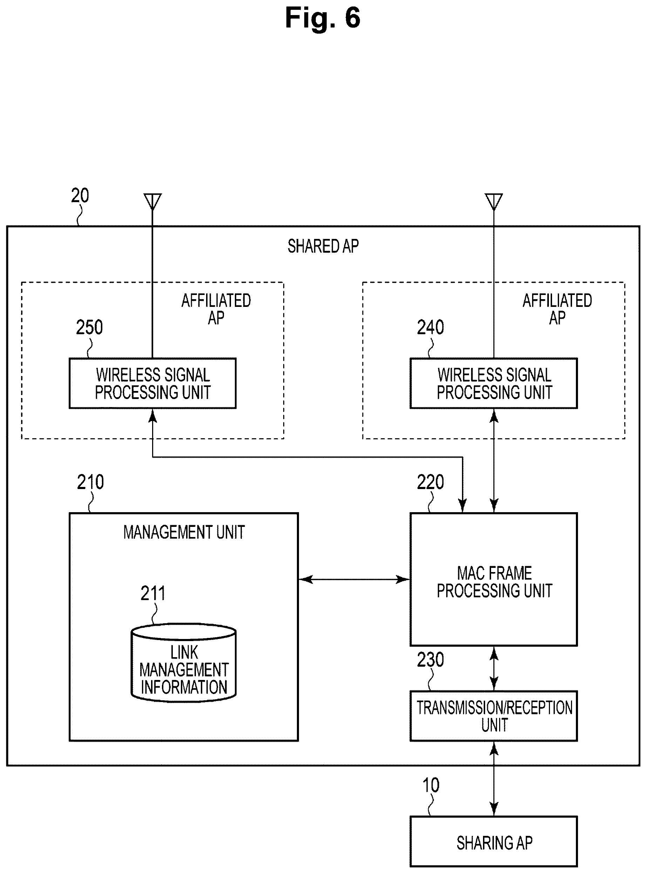

Fig. 6 is a block diagram illustrating an example of a functional configuration of the shared AP according to the embodiment. The shared AP 20 functions as a computer including a management unit 210, a MAC frame processing unit 220, a transmission/reception unit 230, and wireless signal processing units 240 and 250. The management unit 210 and the MAC frame processing unit 220 are functional blocks that execute processing corresponding to the MAC sublayer of the second layer. The wireless signal processing units 240 and 250 are functional blocks that execute processing corresponding to the first layer. Furthermore, in the case where the sharing AP 10 performs the wireless communication with each of the shared APs 20, the transmission/reception unit 230 serves as the functional block that executes the processing corresponding to the first layer, and in the case where the sharing AP 10 performs the wired communication with each of the shared APs 20, the transmission/reception unit 230 serves as the functional block that executes the processing corresponding to the MAC sublayer of the second layer.

The transmission/reception unit 230 transmits and receives the data, the management information, and the like to and from the sharing AP 10 by the wireless communication or the wired communication. In the case where the shared AP 20 performs the wireless communication with the sharing AP 10, the transmission/reception unit 230 includes a wireless signal processing unit. Then, the wireless signal processing unit of the transmission/reception unit 230 adds a preamble and the like to the MAC frame (the data frame, the management frame, and the like) input from the MAC frame processing unit 220 to generate a wireless frame. Then, the wireless signal processing unit of the transmission/reception unit 230 converts the generated wireless frame into a wireless signal, and transmits (radiates) the converted wireless signal to the sharing AP 10 via an antenna. Conversion processing from the wireless frame into the wireless signal is performed as described above.

Furthermore, the wireless signal processing unit of the transmission/reception unit 230 converts the wireless signal received from the sharing AP 10 via an antenna into the wireless frame. Conversion processing from the wireless signal into the wireless frame is performed as described above. The wireless signal processing unit extracts the MAC frame from the converted wireless frame, and outputs the extracted MAC frame to the MAC frame processing unit 220.

In the case where the shared AP 20 performs the wired communication with the sharing AP 10, the transmission/reception unit 230 is connected to the sharing AP 10 via the wired network, and transmits and receives the data, the management information, and the like to and from the sharing AP 10 via the wired network. In this case, the transmission/reception unit 230 includes a network interface of the wired network.

In the case where the shared AP 20 performs the wired communication with the sharing AP 10, the MAC frame processing unit 220 generates a MAC frame including the data, the management information, and the like received by the transmission/reception unit 230 from the sharing AP 10. The MAC frame processing unit 220 adds a MAC header to the LLC packet received by the transmission/reception unit 230 from the sharing AP 10 to generate the MAC frame (data frame). Furthermore, in the case where the shared AP 20 performs the wired communication with the sharing AP 10, in a case where the data frame to serve as the MAC frame is input from either the wireless signal processing unit 240 or 250, the MAC frame processing unit 220 extracts the LLC packet from the input data frame, and outputs the extracted LLC packet to the transmission/reception unit 230. Further, the MAC frame processing unit 220 outputs the management information from the management unit 210 to the transmission/reception unit 230. Then, the transmission/reception unit 230 transmits the LLC packet, the management information, and the like to the sharing AP 10 by the wired communication.

Each of the wireless signal processing units 240 and 250 can transmit and receive the data, the management information, and the like to and from the terminal 30 by the wireless communication. Therefore, each of the wireless signal processing units 240 and 250 of the shared AP 20 can establish the wireless connection with the terminal 30 via any one or more of the plurality of links from the terminal 30, that is, via any one or more of the links from the STA 1 and the STA 2. Each of the wireless signal processing units 240 and 250 adds a preamble and the like to the MAC frame (the data frame, the management frame, and the like) input from the MAC frame processing unit 220 to generate a wireless frame. Then, each of the wireless signal processing units 240 and 250 converts the generated wireless frame into a wireless signal, and transmits (radiates) the converted wireless signal to the terminal 30 via the antenna. Conversion processing from the wireless frame into the wireless signal is performed as described above.

Further, each of the wireless signal processing units 240 and 250 converts the wireless signal received from the terminal 30 via an antenna into the wireless frame. Conversion processing from the wireless signal into the wireless frame is performed as described above. Each of the wireless signal processing units 240 and 250 extracts the MAC frame from the converted wireless frame, and outputs the extracted MAC frame to the MAC frame processing unit 220.

Note that, in the shared AP 20, the plurality of wireless signal processing units 240 and 250 is configured to transmit and receive the wireless signals to and from using frequency bands or channels different from each other. Furthermore, in the case where the shared AP 20 performs the wireless communication with the sharing AP 10, the wireless signal processing unit of the transmission/reception unit 230 is favorably configured to perform transmission and reception using a frequency band or a channel different from the wireless signal processing units 240 and 250. In one example, the wireless signal processing unit 240 is configured to transmit and receive the wireless signal using the same frequency band or channel as the STA 1 of the terminal 30, and wireless signal processing unit 250 is configured to transmit and receive the wireless signal using the same frequency band or channel as the STA 2 of the terminal 30. Then, the wireless signal processing unit of the transmission/reception unit 230 is configured to transmit and receive the wireless signal using the same frequency band or channel as the corresponding one of the wireless signal processing units of the transmission/reception unit 150 of the sharing AP 10.

Furthermore, in the case where the shared AP 20 performs the wireless communication with the sharing AP 10, the transmission/reception unit 230 including the wireless signal processing unit may not be provided. In this case, the shared AP 20 performs the wireless communication with the sharing AP 10 via wither the wireless signal processing unit 240 or 250. Note that, in the example of Fig. 6, in the shared AP 20, each of the plurality of wireless signal processing units 240 and 250 constitutes one affiliated AP. For example, in the shared AP 20-1, the wireless signal processing unit 240 configures the A-AP 1-1, and the wireless signal processing unit 250 configures the A-AP 1-2. Similarly, in the shared AP 20-2, the wireless signal processing unit 240 configures the A-AP 2-1, and the wireless signal processing unit 250 configures the A-AP 2-2. In the shared AP 20-3, the wireless signal processing unit 240 configures the A-AP 3-1, and the wireless signal processing unit 250 configures the A-AP 3-2.

The MAC frame processing unit 220 outputs the data frame, which is the MAC frame, to the corresponding one or more of the wireless signal processing units 240 and 250. At this time, the MAC frame processing unit 220 outputs the data frame to the wireless signal processing unit (corresponding one or more of 240 and 250) corresponding to the link to which the data (traffic) input from the transmission/reception unit 230 is allocated.

In a case where the management information is input from any one of the transmission/reception unit 230 and the wireless signal processing units 240 and 250, the MAC frame processing unit 220 outputs the input management information to the management unit 210. Further, in a case where the management information to be notified to the sharing AP 10 is input from the management unit 210, the MAC frame processing unit 220 outputs the input management information to the transmission/reception unit 230. In a case where the management information to be notified to the terminal 30 is input from the management unit 210, the MAC frame processing unit 220 generates a beacon frame as a management frame from the input management information. Then, the MAC frame processing unit 220 outputs the generated beacon frame to the corresponding one or more of the wireless signal processing units 240 and 250. Then, the wireless signal obtained by converting the beacon frame is transmitted from the corresponding one or more of the wireless signal processing units 240 and 250, whereby the management information included in the beacon is notified to the terminal 30.

The management information notified from the shared AP 20 with the beacon includes information regarding the sharing AP 10, information regarding the shared AP 20 of the own station, and information regarding the shared AP 20 of another station belonging to the sharing AP 10. Further, the shared AP 20 may receive the multi-AP management information 131, the terminal management information 132, and the like from the sharing AP 10, and the management unit 210 may notify the multi-AP management information 131, the terminal management information 132, and the like with the beacon.

Furthermore, the management unit 210 stores link management information 211 as the management information regarding the wireless connection of the terminal 30 in the multi-AP connection method. The link management information 211 indicates whether or not the shared AP 20 of the own station is the connection destination for each of the plurality of links from the terminal 30. Furthermore, for the link to which the shared AP 20 of the own station is the connection destination among the plurality of links, the identifier of the affiliated AP to serve as the connection destination is indicated in the link management information 211. For example, in a case where the shared AP 20-1 serves as the connection destination of the link, which of the A-AP 1-1 or the A-AP 1-2 (the wireless signal processing unit 240 or 250) is the connection destination of the link is indicated. The identifier of the affiliated AP may include the MAC address of the affiliated AP.

Further, the transmission/reception unit 230 receives, from the sharing AP 10, an instruction related to allocation of traffic to the plurality of links from the terminal 30. The management unit 210 allocates the traffic to the link wirelessly connected to the shared AP 20 of the own station according to an instruction related to allocation from the sharing AP 10. Then, the management unit 210 notifies the MAC frame processing unit 220 of an output destination of the traffic to be transmitted to the terminal 30 on the basis of an allocation result. Thereby, which of the wireless signal processing units 240 and 250 the traffic to be transmitted to the terminal 30 is output is notified from the management unit 210 to the MAC frame processing unit 220.

In the handover operation, when the sharing AP 10 sets the switching target link and the anchor link in response to the handover request, the transmission/reception unit 230 of the shared AP 20 receives setting information regarding the switching target link and the anchor link. As a result, the management unit 210 acquires the setting information regarding the switching target link and the anchor link. The setting information regarding the anchor link indicates the identifier of the link to serve as the anchor link, and the like. Further, the setting information regarding the anchor link also indicates whether or not the anchor link corresponds to the switching target link.

The setting information regarding the switching target link indicates the identifier of each of the switching target links, and the like. In addition, the setting information regarding the switching target link indicates, for each of the switching target links, the shared AP 20 targeted for the disassociation processing for cutting off the wireless connection and the shared AP 20 targeted for the association processing for newly establishing the wireless connection. Furthermore, the setting information regarding the switching target link may indicate, for each of the switching target links, the affiliated AP targeted for the disassociation processing and the affiliated AP targeted for the association processing.

In a case where the shared AP 20 of the own station is targeted for the disassociation processing of the switching target link, the management unit 210 performs the disassociation processing to cut off the wireless connection of the switching target link with the terminal 30. Then, the management unit 210 causes the transmission/reception unit 230 to transmit the notification information for notifying completion of the disassociation processing to the sharing AP 10, corresponding to completion of the disassociation processing for each of the switching target links.

Further, in a case where the shared AP 20 of the own station is targeted for the association processing of the switching target link, the management unit 210 performs the association processing to newly establish the wireless connection of the switching target link with the terminal 30. Then, the management unit 210 causes the transmission/reception unit 230 to transmit the notification information for notifying completion of the association processing to the sharing AP 10, corresponding to completion of the association processing for each of the switching target links.

In a case where the shared AP 20 of the own station serves as the connection destination of the anchor link, the management unit 210 maintains the wireless connection with the terminal 30 via the anchor link while the shared AP 20 to serve as the connection destination is switched for the switching target link other than the anchor link. At this time, the wireless connection with the terminal 30 via the anchor link is maintained until the disassociation processing and the association processing are completed for all the switching target links other than the anchor link.

Further, the management unit 210 causes the MAC frame processing unit 220 to output the traffic to be transmitted to the terminal 30 to the affiliated AP (wireless signal processing unit) as the connection destination of the anchor link while the shared access point as the connection destination is switched for the switching target link other than the anchor link. For example, in a case where the A-AP 1-1 of the shared AP 20-1 serves as the connection destination of the anchor link, data is transmitted from the A-AP 1-1 to the terminal 30 via the anchor link while the connection destination is switched for the switching target link other than the anchor link.

Furthermore, in a case where the shared AP 20 of the own station corresponds to the connection destination of the anchor link, and the anchor link is to be switched, the management unit 210 cuts off the wireless connection with the terminal 30 via the anchor link on the basis of completion of switching of the shared AP 20 to serve as the connection destination for all the switching target links other than the anchor link. Therefore, the disassociation processing and the association processing for the anchor link are performed on the basis of completion of switching of the shared AP 20 to serve as the connection destination for all the switching target links other than the anchor link.

Note that, in one example, in the shared AP 20, each of the plurality of affiliated APs includes the wireless signal processing unit (corresponding one of 240 and 250) and the quality measuring unit. In this case, in each of the plurality of affiliated APs, the quality measuring unit measures the communication quality of the link from the affiliated STA of the terminal 30. The quality measuring unit measures the communication quality of the link by measuring the received electric power from the affiliated STA of the terminal 30 or the like. Then, in each of the affiliated APs, the quality measuring unit notifies the management unit 210 of the measurement result regarding the communication quality of the link from the affiliated AP of the terminal 30.

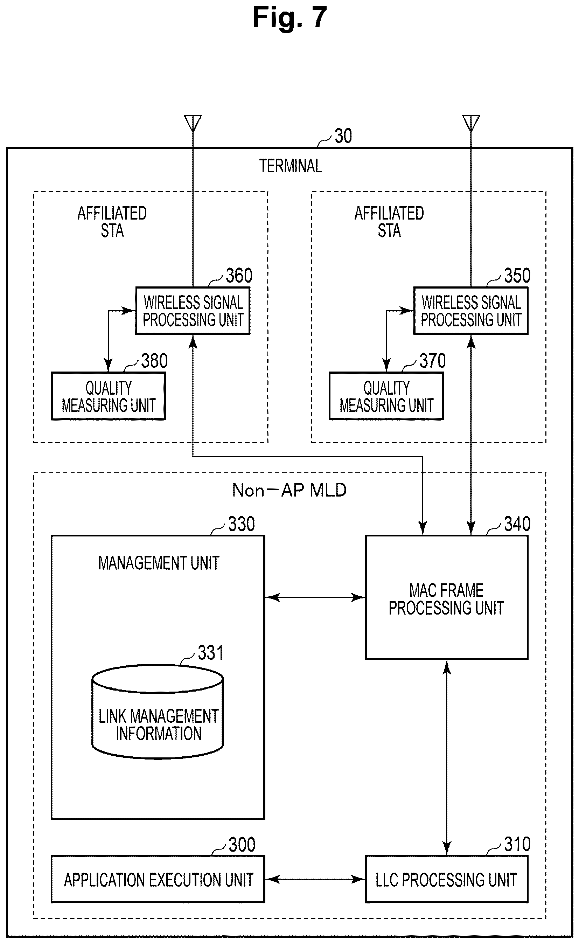

Fig. 7 is a block diagram illustrating an example of a functional configuration of the terminal according to the embodiment. The terminal 30 functions as a computer including an application execution unit 300, an LLC processing unit 310, a management unit 330, a MAC frame processing unit 340, wireless signal processing units 350 and 360, and quality measuring units 370 and 380. The application execution unit 300 is a functional block that executes processing corresponding to the seventh layer. The LLC processing unit 310 is a functional block that executes processing corresponding to the LLC sublayer of the second layer and the third layer to the sixth layer. The management unit 330 and the MAC frame processing unit 340 are functional blocks that execute processing corresponding to the MAC sublayer of the second layer. The wireless signal processing units 350 and 360 and the quality measuring units 370 and 380 are functional blocks that execute processing corresponding to the MAC sublayer of the second layer and the first layer.

The application execution unit 300 executes an application on the basis of data input from the LLC processing unit 310. In addition, the application execution unit 300 inputs data to the LLC processing unit 310. For example, the application execution unit 300 can display application information on the display 35. Further, the application execution unit 300 can operate on the basis of operation of an input interface.

The LLC processing unit 310 that also functions as a data processing unit adds a DSAP header, an SSAP header, and the like to the data input from the application execution unit 300 to generate an LLC packet. Then, the LLC processing unit 310 outputs the generated LLC packet to the MAC frame processing unit 340. Further, the LLC processing unit 310 extracts data from the LLC packet input from the MAC frame processing unit 340. Then, the LLC processing unit 310 outputs the extracted data to the application execution unit 300.

The management unit 330 controls the connection (logical wireless connection) between the sharing AP 10 and the non-AP MLD of the terminal 30 in the multi-AP connection method. The terminal 30 receives the beacon from the shared AP 20, so that the management unit 330 acquires the management information included in the beacon. In one example, when the terminal 30 receives the beacon from the shared AP 20, the management unit 330 acquires the multi-AP management information 131, the terminal management information 132, and the like. The management unit 330 manages the management information included in the beacon. Then, the management unit 330 controls the wireless connection with the shared AP 20 to serve as the connection destination on the basis of the management information, for the links from the respective A-STA 1 and A-STA 2 that are affiliated STAs.

Further, the management unit 330 stores link management information 331. The link management information 331 indicates the identifier of the shared AP 20 to serve as the connection destination for each of the plurality of links from the terminal 30. Furthermore, for each of the plurality of links, the identifier of the affiliated AP wirelessly connected in the shared AP 20 to serve as the connection destination is indicated in the link management information 331.

The MAC frame processing unit 340 adds a MAC header to the LLC packet input from the LLC processing unit 310 to generate a MAC frame. Then, the MAC frame processing unit 340 distributes the generated MAC frame to the wireless signal processing units 350 and 360. At this time, the MAC frame is output to the corresponding one or more of the wireless signal processing units 350 and 360 (A-STA 1 and A-STA 2). Furthermore, the MAC frame processing unit 340 extracts the LLC packet or the management information from the MAC frame input from each of the wireless signal processing units 350 and 360. Then, the MAC frame processing unit 340 outputs the LLC packet to the LLC processing unit 310, and outputs the management information to the management unit 330.

In the terminal 30, the non-AP MLD is configured by the management unit 330, the MAC frame processing unit 340, and the like. Furthermore, in the example of Fig. 7, in the terminal 30, the wireless signal processing unit 350 and the quality measuring unit 370 constitute the A-STA 1, which is one of the affiliated STAs, and the wireless signal processing unit 360 and the quality measuring unit 380 constitute the A-STA 2, which is the affiliated STA different from the A-STA 1. The wireless signal processing unit 350 and the quality measuring unit 370 have functional configurations equivalent to the wireless signal processing unit 360 and the quality measuring unit 380, respectively. Note that, in one example, the quality measuring unit may be provided in each of the affiliated APs in the shared AP 20, and the quality measuring unit may not be provided in each of the affiliated STAs of the terminal 30. Also in this case, each of the affiliated APs includes the wireless signal processing unit (corresponding one of 350 and 360).

Each of the wireless signal processing units 350 and 360 adds a preamble and the like to the MAC frame input from the MAC frame processing unit 340 to generate a wireless frame. Then, each of the wireless signal processing units 350 and 360 converts the generated wireless frame into a wireless signal, and transmits (radiates) the converted wireless signal via the antenna. Conversion processing from the wireless frame into the wireless signal is performed as described above.

Further, each of the wireless signal processing units 350 and 360 converts the wireless signal received from the corresponding shared AP 20 via an antenna into the wireless frame. Conversion processing from the wireless signal into the wireless frame is performed as described above. Each of the wireless signal processing units 350 and 360 extracts the MAC frame from the converted wireless frame, and outputs the extracted MAC frame to the MAC frame processing unit 340.

Each of the quality measuring units 370 and 380 measures the communication quality of the link (wireless link) from the wireless signal processing unit 350 or 360(A-STA 1 or A-STA 2) by measuring the received electric power from the affiliated AP of the shared AP 20 existing in a detectable range. Then, in each of the plurality of affiliated STAs of the terminal 30, the quality measuring unit (the corresponding one of 370 and 380) notifies the management unit 330 of a measurement result regarding the communication quality of the link.

The management unit 330 determines whether or not to notify the sharing AP 10 of the handover request on the basis of the measurement result of the communication quality in the quality measuring unit 370 or 380. For example, in a case where there is a link whose received electric power is equal to or less than a threshold among the links from the wireless signal processing units 350 and 360, the management unit 330 notifies the sharing AP 10 of the handover request via any of the shared APs 20. When the anchor link is set in the sharing AP 10, corresponding to the handover request, a handover response that is a response to the handover request is transmitted from any of the shared APs 20 to the terminal 30. Then, when the terminal 30 receives the handover response, the management unit 330 acquires the setting information for the anchor link.

The management unit 330 switches the connection destination for each of the switching target links other than the anchor link, corresponding to the notification of the setting information for the anchor link. At this time, for each of the switching target links other than the anchor link, the disassociation processing of disconnecting the wireless connection with the wirelessly connected shared AP 20 and the association processing of establishing the wireless connection with the shared AP 20 to serve as the new connection destination are performed. Further, the management unit 330 allocates (maps) the traffic transmitted and received to and from the sharing AP 10 to the anchor link while the shared AP 20 to serve as the connection destination is switched for the switching target links other than the anchor link.

Furthermore, in the case where the anchor link is to be switched to the connection destination, the management unit 330 notifies the sharing AP 10 of the connection destination switching request for the anchor link via any one of the shared APs 20 on the basis of completion of switching of the shared AP 20 to serve as the connection destination for all the switching target links other than the anchor link. Then, the switching response of the connection destination of the anchor link, which is a response to the switching request of the anchor link, is notified from the sharing AP 10 to the management unit 330 of the terminal 30 via any one of the shared APs 20.

The management unit 330 switches the connection destination for the anchor link, corresponding to the instruction to switch the connection destination of the anchor link in the switching response of the anchor link. At this time, for the anchor link, the disassociation processing of disconnecting the wireless connection with the wirelessly connected shared AP 20 and the association processing of establishing the wireless connection with the shared AP 20 to serve as the new connection destination are performed.

The management unit 330 allocates the traffic to be transmitted and received to and from the sharing AP 10 for the links other than the anchor link among the plurality of links while the connection destination switching operation is performed for the anchor link. Therefore, the traffic associated with the anchor link is allocated to the links other than the anchor link while the switching operation of the connection destination is performed for the anchor link. Further, when the connection destination switching operation for the anchor link is completed and the handover operation is completed, the management unit 330 allocates the traffic transmitted and received to and from the sharing AP 10 to all of the plurality of links including the anchor link.

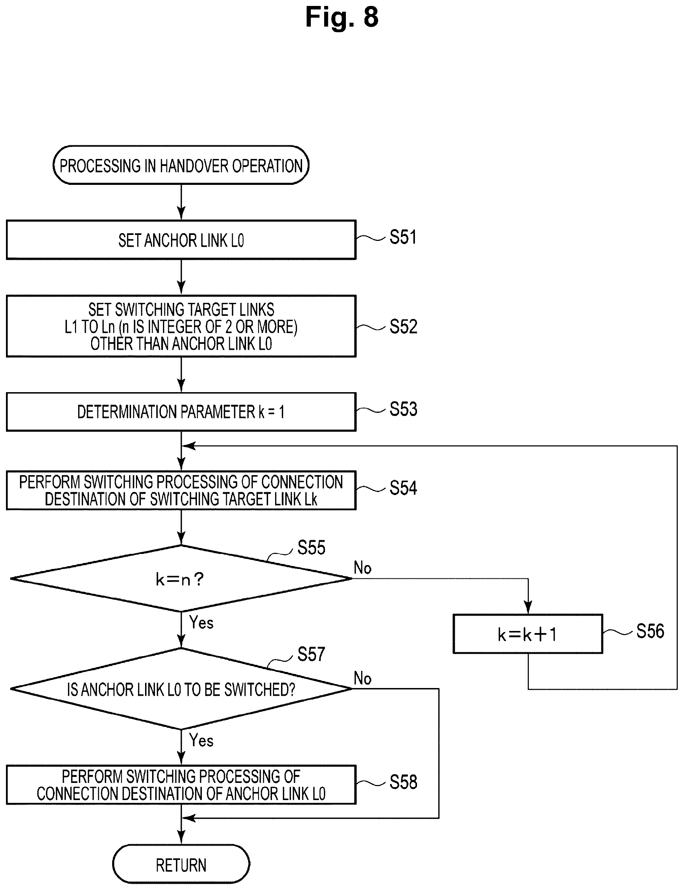

Next, an operation in the communication system according to the embodiment will be described, and in particular, the handover operation will be described. Fig. 8 is a flowchart illustrating an example of processing in the handover operation performed by the communication system according to the embodiment. The processing illustrated in the example of Fig. 8 is performed by the management unit 130 of the sharing AP 10, the management unit 210 of each of the shared APs 20, the management unit 330 of the terminal 30, and the like. Furthermore, in the example of Fig. 8, a case where the terminal 30 can establish three or more links, and there are two or more switching target links other than the anchor link will be described.

When the handover operation is started corresponding to the handover request from the terminal 30, the management unit 130 sets an anchor link L0 from among the plurality of links (S51) and sets switching target links L1 to Ln (n is an integer of 2 or more) other than the anchor link L0 (S52). At this time, for example, the anchor link L0 is numbered as "0", and the switching target links L1 to Ln other than the anchor link L0 are numbered as "1" to "n", respectively. The setting of the anchor link L0 and the switching target links L1 to Ln is performed as described above on the basis of the communication quality such as the received electric power. Furthermore, in a case where only some of the plurality of links are to be switched, it is favorable that the anchor link L0 is set from links other than the switching target links.

In the example of Fig. 8, a determination parameter k is defined. The determination parameter k can be set to an integer between 1 and n, both inclusive. The management unit 130 sets the determination parameter k to 1 that is an initial value (S53). Then, the management unit 130 performs switching processing of switching the connection destination of a switching target link Lk in cooperation with the management unit 210 of the corresponding shared AP 20 and the management unit 330 of the terminal 30 (S54). At this time, for the switching target link Lk, the disassociation processing with the wirelessly connected shared AP 20 and the association processing with the shared AP 20 to serve as the new connection destination are performed. Further, the traffic transmitted and received between the sharing AP 10 and the terminal 30 is allocated to the anchor link L0 while the switching processing of the switching target link Lk is performed. Note that the link Lk specified by the determination parameter k is any association with a link ID, and the link Lk is not directly associated with the link ID in ascending order.

When the switching processing of the switching target link Lk is completed, the management unit 130 or the like determines whether or not a value of the determination parameter k is n (S55). Then, in a case where the value of the determination parameter k is smaller than n (No in S55), the management unit 130 or the like adds 1 to the value of the determination parameter k (S56). Then, the processing returns to S54, and processing of S54 and subsequent steps is sequentially performed. Therefore, the processing of S54 to S56 is repeatedly performed until the value of the determination parameter k becomes n. As a result, the switching processing of switching the connection destination is performed for each of the switching target links L1 to Ln.

In a case where the value of the determination parameter k is n (Yes in S55), the management unit 130 or the like determines whether or not the anchor link L0 is to be switched to the connection destination (S57). Then, in a case where the anchor link L0 is to be switched (Yes in S57), the management unit 130 performs the switching processing of switching the connection destination of the anchor link L0 in cooperation with the management unit 210 of the corresponding shared AP 20 and the management unit 330 of the terminal 30 (S58). At this time, for the anchor link L0, the disassociation processing with the wirelessly connected shared AP 20 and the association processing with the shared AP 20 to serve as the new connection destination are performed. Further, the traffic transmitted and received between the sharing AP 10 and the terminal 30 is allocated to the link other than the anchor link L0 while the switching processing of the anchor link L0 is performed. In the case where the anchor link L0 is to be switched (No in S57), the processing of S58 is not performed.

Note that, in a case where there is only one switching target link other than the anchor link, the switching target link L1 is set. Then, when the switching processing of switching the connection destination of the switching target link L1 is completed, it is determined whether or not the anchor link L0 is to be switched to the connection destination. Further, in the example of Fig. 8, connection destinations of the switching target links L1 to Ln are sequentially switched by the processing of S53 to S56, but in one example, the connection destinations of the switching target links L1 to Ln may be switched in parallel with one another. Note that even in a case where the connection destinations of the switching target links L1 to Ln are switched in parallel with one another, the switching processing of switching the connection destination of the anchor link L0 and the like is performed on the basis of the completion of the switching of the connection destinations for all of the switching target links L1 to Ln.

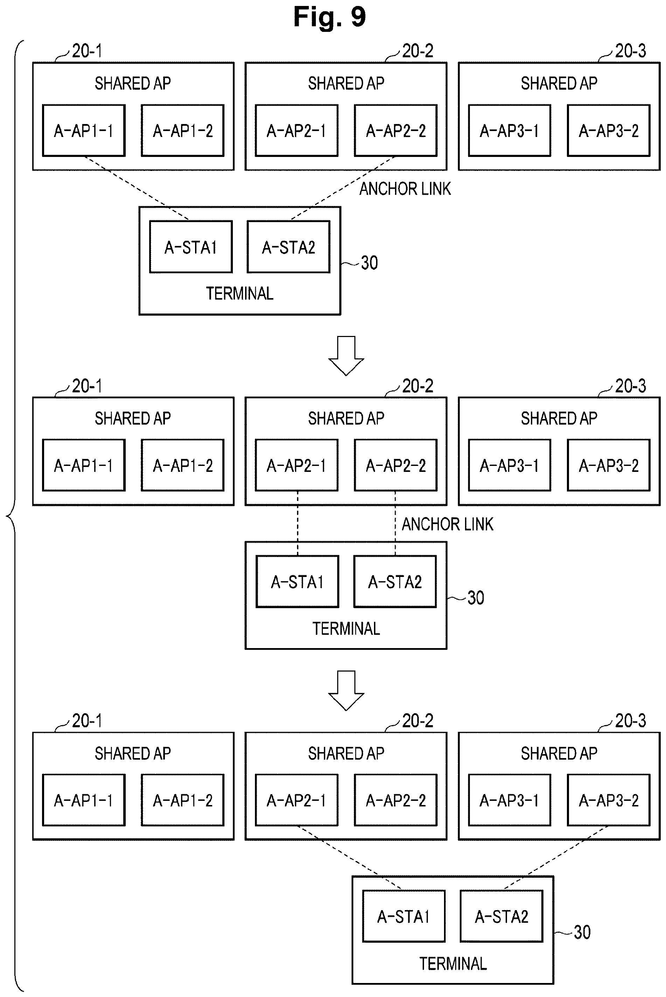

Fig. 9 is a schematic diagram illustrating an example of the handover operation in the communication system according to the embodiment. In the example of Fig. 9, the handover operation is started from a state in which the link from the A-STA 1 is wirelessly connected with the A-AP 1-1 of the shared AP 20-1 and the link from the A-STA 2 is wirelessly connected with the A-AP 2-2 of the shared AP 20-2. Then, the link from the A-STA 2 is set as the anchor link. Therefore, when the handover operation is started, the connection destination is switched for the link from the A-STA 1 in the state where the wireless connection with the shared AP 20-2, of the link from the A-STA 2 that is the anchor link, is maintained. At this time, the wireless connection of the link from the A-STA 1 to the shared AP 20-1 is cut off by the disassociation processing, and the wireless connection of the link from the A-STA 1 to the A-AP 2-1 of the shared AP 20-2 is established by the association processing.

Then, when the switching of the connection destination of the link from the A-STA 1 is completed, the connection destination is switched for the link from the A-STA 2 as the anchor link. At this time, the wireless connection of the link from the A-STA 2 to the shared AP 20-2 is cut off by the disassociation processing, and the wireless connection of the link from the A-STA 2 to the A-AP 3-2 of the shared AP 20-3 is established by the association processing.

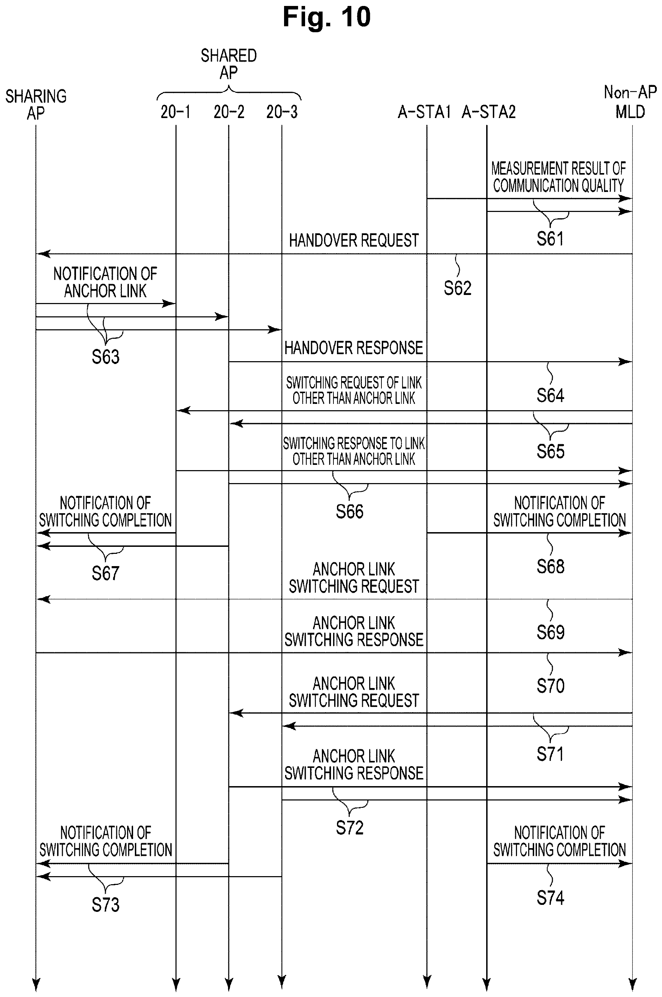

Fig. 10 is a sequence diagram illustrating an example of the communication processing based on the multi-AP connection method performed at the time of handover operation in the communication system according to the embodiment. Fig. 10 illustrates the communication processing in the case where the handover operation in the example of Fig. 9 is performed. Furthermore, Fig. 10 illustrates a flow of information exchanged among the sharing AP 10, the shared APs 20-1 to 20-3, the A-STA 1 and A-STA 2 that are the affiliated STAs, and the non-AP MLD.

In the example of Fig. 10, prior to the start of the handover operation, the non-AP MLD is notified of the measurement result of the communication quality such as the received electric power for the link from each of the A-STA 1 and the A-STA 2 (S61). Then, the non-AP MLD determines that it is necessary to switch the connection destination for the link from each of the A-STA 1 and the A-STA 2 on the basis of the measurement result of the communication quality, and transmits the handover request to the sharing AP 10 (S62). The handover request is transmitted using any one or more of the links from the A-STA 1 and the A-STA 2. Further, the handover request is transmitted together with the measurement result of the communication quality of each of the plurality of links from the terminal 30.

When receiving the handover request, the sharing AP 10 sets the anchor link as described above, and notifies the belonging shared APs 20-1 to 20-3 of the setting information for the anchor link (S63). Further, when the anchor link is set, the sharing AP 10 allocates the traffic transmitted and received between the sharing AP 10 and the terminal 30 via the shared AP 20 to the anchor link in cooperation with the non-AP MLD or the like. Then, the non-AP MLD of the terminal 30 receives the handover response as a response to the handover request (S64). At this time, the non-AP MLD is notified of the setting information about the anchor link together with the handover response. Note that, in the example of Fig. 10, the handover response is transmitted via the anchor link from the shared AP 20-2 to which the anchor link (the link from the A-STA 2) is wirelessly connected. However, the handover response may be transmitted via a link other than the anchor link.

Then, the non-AP MLD transmits a connection destination switching request for the switching target link other than the anchor link to the corresponding shared AP 20 (S65). In the example of Fig. 10, a disassociation request is made to the shared AP 20-1 to which the link from the A-STA 1 as the switching target link is wirelessly connected, and an association request is made to the shared AP 20-2 as the new connection destination of the link from the A-STA 1. Then, the non-AP MLD receives a connection destination switching response for the switching target link other than the anchor link from the corresponding shared AP 20 as a response to the switching request of the link other than the anchor link (S66). When the non-AP MLD receives the switching response to the link other than the anchor link, the switching processing of switching the connection destination is performed for the switching target link other than the anchor link.

Then, when the connection destination of the switching target link other than the anchor link is switched, the corresponding shared AP 20 notifies the sharing AP 10 that the switching of the connection destination has been completed (S67). In the example of Fig. 10, the completion of the disassociation processing is notified from the shared AP 20-1, and the completion of the association processing is notified from the shared AP 20-2. Further, when the connection destination of the switching target link other than the anchor link is switched, the corresponding affiliated STA notifies the non-AP MLD that the switching of the connection destination has been completed (S68). In the example of Fig. 10, the completion of the disassociation processing and the association processing is notified from the A-STA 1. Note that, in a case where there is a plurality of switching target links other than the anchor link, communication processing similar to S65 to S68 is repeated the same number of times as the number of switching target links other than the anchor link.

When the switching of the connection destination of the links other than the anchor link is completed, the non-AP MLD transmits the connection destination switching request for the anchor link to the sharing AP 10 (S69). Then, the non-AP MLD receives a connection destination switching response for the anchor link from the sharing AP 10 as a response to the switching request of the anchor link (S70). When the switching request of the anchor link is received, the sharing AP 10 allocates the traffic transmitted and received between the sharing AP 10 and the terminal 30 to the links other than the anchor link in cooperation with the non-AP MLD or the like.

Then, the non-AP MLD transmits the connection destination switching request for the anchor link to the corresponding shared AP 20 (S71). In the example of Fig. 10, the disassociation request is made to the shared AP 20-2 to which the link from the A-STA 2 that is the anchor link is wirelessly connected, and the association request is made to the shared AP 20-3 that is the new connection destination of the link from the A-STA 2. Then, the non-AP MLD receives the connection destination switching response for the anchor link from the corresponding shared AP 20 as a response to the switching request of the anchor link (S72). When the non-AP MLD receives the switching response to the anchor link, the switching processing of switching the connection destination is performed for the anchor link.

Then, when the connection destination of the anchor link is switched, the corresponding shared AP 20 notifies the sharing AP 10 that the switching of the connection destination has been completed (S73). In the example of Fig. 10, the completion of the disassociation processing is notified from the shared AP 20-2, and the completion of the association processing is notified from the shared AP 20-3. Further, when the connection destination of the anchor link is switched, the corresponding affiliated STA notifies the non-AP MLD that the switching of the connection destination has been completed (S74). In the example of Fig. 10, the completion of the disassociation processing and the association processing is notified from the A-STA 2. Note that, in the case where the anchor link is not to be switched, the communication processing of S69 to S74 is not performed.

Note that Figs. 9 and 10 illustrate an example in which two links from the terminal 30 are wirelessly connected to the shared APs 20 different from each other before and after the handover operation. Note that even in a case where two links from the terminal 30 are wirelessly connected to the shared AP 20 common to each other at least one of before the handover operation and after the handover operation, the handover operation is performed similarly to the example of Fig. 9, and the communication processing is performed similarly to the example of Fig. 10 at the time of handover operation.

For example, it is assumed that the connection destination of the link from each of the A-STA 1 and the A-STA 2 is switched from the shared AP 20-1 to the shared AP 20-2 by the handover operation. In this case, the two links from the terminal 30 are wirelessly connected to the shared AP 20-1 common to each other before the handover operation, and are wirelessly connected to the shared AP 20-2 common to each other after the handover operation. Even in this case, one of the two links is set as the anchor link, and the connection destination of the link other than the anchor link is switched in a state where the wireless connection of the anchor link with the shared AP 20-1 is maintained. Then, the connection destination of the anchor link is switched on the basis of the completion of switching of the connection destination of the link other than the anchor link. Furthermore, at the time of handover operation, communication processing is performed in a similar manner to the example of Fig. 10.

As described above, in the present embodiment, in the handover operation, one of the plurality of links from the terminal 30 is set as the anchor link, and the shared AP 20 to serve as the connection destination is switched for the switching target link other than the anchor link in the state where the wireless connection with the shared AP 20 to serve as the connection destination in the anchor link is maintained. Since the connection destination of the link other than the anchor link is switched in the state where the wireless connection by the anchor link is maintained, occurrence of instantaneous interruption in which the wireless connection with the shared AP 20 is cut off in all of the plurality of links from the terminal 30 is effectively suppressed in the handover operation. Therefore, the shared AP 20 to serve as the connection destination can be appropriately switched for the switching target link among the plurality of links from the terminal 30 without causing the instantaneous interruption.

Furthermore, in the present embodiment, in the case where the anchor link is the switching target link, the shared AP 20 to serve as the connection destination is switched for the anchor link on the basis of the completion of switching of the shared AP 20 to serve as the connection destination for all the switching target links other than the anchor link. Therefore, even in a case where it is necessary to switch the connection destination of the link set as the anchor link, such as a case where the connection destination is switched for all of the plurality of links from the terminal 30 in the handover operation, occurrence of the instantaneous interruption is effectively suppressed.

By suppressing occurrence of the instantaneous interruption, stability of the connection between the sharing AP 10 and the terminal 30 is secured even in the state where the handover operation is performed. In addition, since the occurrence of the instantaneous interruption is suppressed, it is not necessary to provide a wireless communication system or the like that connects the sharing AP 10 and the terminal 30 separately from the communication system 1 that connects the sharing AP 10 and the terminal 30 via any one of the shared APs 20. Therefore, electric power saving can be realized in the system configuration in which data is exchanged between the sharing AP 10 and the terminal 30.

Further, in the present embodiment, the traffic transmitted and received between the sharing AP 10 and the terminal 30 is allocated to the anchor link while the shared AP 20 to serve as the connection destination is switched for the switching target links other than the anchor link. Further, the traffic transmitted and received between the sharing AP 10 and the terminal 30 is allocated to the link other than the anchor link while the shared AP 20 to serve as the connection destination is switched for the anchor link. Therefore, even in the state where the connection destinations of the respective switching target links are switched by the handover operation, data exchange between the sharing AP 10 and the terminal 30 is appropriately performed.

Note that, in the above-described embodiment, a case where two affiliated STAs are provided in the terminal 30 has been mainly described. However, it is sufficient for the terminal 30 to have a configuration provided with a plurality of affiliated STAs, and three or more affiliated STAs may be provided in the terminal 30. Furthermore, in the above-described embodiment, a case where two affiliated APs are provided in each of the shared APs 20 has been mainly described. However, three or more affiliated APs may be provided in the terminal 30. Furthermore, only one affiliated AP may be provided in each of the shared APs 20.

For example, each of the four shared APs 20-1, 20-2, 20-3, and 20-4 is provided as a shared AP belonging to the sharing AP 10, and each of the shared APs 20-1 to 20-4 includes only one affiliated AP. Then, by the handover operation, the connection destination of one of the two links from the terminal 30 is switched from the shared AP 20-1 to the shared AP 20-3, and the connection destination of the other of the two links from the terminal 30 is switched from the shared AP 20-1 to the shared AP 20-3. Also in this case, in the state where the handover operation is being performed, processing similar to the above-described processing is performed by the management unit 130, 210, and 330 and the like. Therefore, one of the two links is set as the anchor link, and the connection destination of the link other than the anchor link is switched in the state where the wireless connection by the anchor link is maintained. Then, the connection destination of the anchor link is switched on the basis of the completion of switching of the connection destination of the link other than the anchor link.

Furthermore, in the above-described embodiment, the function of the sharing AP and the function of the shared AP are completely divided, but in a modification, the sharing AP may have the function of the shared AP. For example, in a communication system 1 similar to Fig. 1 or the like, the sharing AP 10 may perform processing of the shared AP 20-1 in addition to the above-described processing. In this case, the sharing AP 10 includes the management unit 210, the MAC frame processing unit 220, and the wireless signal processing units 240 and 250 as a functional configuration in addition to the LLC processing unit 110, the data processing unit 120, the management unit 130, the frame processing unit 140, and the transmission/reception unit 150.

In the sharing AP 10 having the function of the shared AP, the transmission/reception unit 150 transmits and receives the data, management information, and the like to and from each of the shared APs 20-2 and 20-3 that are the belonging shared APs 20 by the wireless communication or the wired communication. Then, in the sharing AP 10, each of the wireless signal processing units 240 and 250 can transmit and receive the data, management information, and the like to and from the terminal 30 by the wireless communication. Furthermore, the data, management information, and the like are exchanged between the frame processing unit 140 included in the function of the sharing AP 10 and the MAC frame processing unit 220 included in the function of the shared AP. Even in the case where the sharing AP 10 having the function of the shared AP is provided, the sharing AP 10, the shared AP 20 belonging to the sharing AP 10, and the terminal 30 perform processing similar to the above-described embodiment and the like.

Furthermore, in the above-described embodiment and the like, in the connection between the sharing AP 10 and the terminal 30, the number of shared APs to pass through is one, but in a modification, the sharing AP and the terminal may be connected via two or more shared APs. That is, the processing of the above-described embodiment and the like can also be applied to a multi-AP connection method having a multistage configuration in which two or more shared APs are interposed between the sharing AP and the terminal.

Moreover, processing according to the above-described embodiment and the like can be stored as a program that can be executed by a processor that is a computer. Moreover, it is possible to store and distribute a program that executes the above-described processing in a storage medium of an external storage device such as a magnetic disk, an optical disk, or a semiconductor memory. Then, the processor reads the program stored in the storage medium of the external storage device, and the operation is controlled by the read program, whereby processing according to the embodiment or the like can be executed.

Note that the present invention is not limited to the above-described embodiment, and various modifications can be made at the implementation stage without departing from the gist of the invention. In addition, the embodiments may be implemented in appropriate combination, and in that case, a combined effect can be obtained. Furthermore, the above-described embodiments include various inventions, and various inventions can be extracted by a combination selected from a plurality of disclosed constituent elements. For example, even if some components are deleted from all the components shown in the embodiment, if the problem can be solved and the effect can be obtained, the configuration from which the components are deleted can be extracted as the invention.

### Reference Signs List

1 Communication system
10 Sharing AP
11, 21, 31CPU
12, 22, 32 ROM
13, 23, 33 RAM
14, 24, 34 Wireless communication module
15 Wired communication module
20, 20-1, 20-2, 20-3, 20-4 Shared AP
30 Terminal
35 Display
36 Storage
40 Network
110, 310 LLC processing unit
120 Data processing unit
130, 210, 330 Management unit
131 Multi-AP management information
132 Terminal management information
133 Quality estimation unit
140 Frame processing unit
150, 230 Transmission/reception unit
211, 331 Link management information
220, 340 MAC frame processing unit
240, 250, 350, 360 Wireless signal processing unit
300 Application execution unit
370, 380 Quality measuring unit

## Claims

1. A sharing access point comprising:
a management unit configured to:
set, in a state in which each of a plurality of links from a terminal is wirelessly connected to one of a plurality of shared access points, one of the plurality of links as an anchor link, corresponding to reception of a handover request for requesting switching of a shared access point to serve as a connection destination for one or more of the plurality of links from the terminal, and
switch the shared access point to serve as the connection destination for a switching target link to be switched among the links other than the anchor link in a state of maintaining the wireless connection with the shared access point to serve as the connection destination in the anchor link.

2. The sharing access point according to claim 1, wherein, in a case where the anchor link becomes the switching target link to be switched, the management unit is configured to switch the shared access point to serve as the connection destination for the anchor link on a basis of completion of switching of the shared access point to serve as the connection destination for all of the switching target links other than the anchor link.

3. The sharing access point according to claim 1 or 2, wherein the management unit is configured to allocate traffic to be transmitted and received to and from the terminal to the anchor link while switching of the shared access point to serve the connection destination is performed for the switching target link other than the anchor link, corresponding to the setting of the anchor link.

4. A terminal comprising:
a plurality of wireless signal processing units each configured to establish a corresponding one of a plurality of links and each configured to be wirelessly connected to one of a plurality of shared access points via the corresponding one of the plurality of links; and
a management unit configured to transmit a handover request for requesting switching of a shared access point to serve as a connection destination for one or more of the plurality of links, and switch the shared access point to serve the connection destination for a switching target link to be switched among the links other than an anchor link, in a state of maintaining the wireless connection with the shared access point to serve as the connection destination in the anchor link, on a basis of a fact that the sharing access point sets one of the plurality of links as the anchor link corresponding to the handover request.

5. The terminal according to claim 4, wherein, in a case where the anchor link becomes the switching target link to be switched, the management unit is configured to switch the shared access point to serve as the connection destination for the anchor link on a basis of completion of switching of the shared access point to serve as the connection destination for all of the switching target links other than the anchor link.

6. The terminal according to claim 4 or 5, wherein the management unit is configured to allocate traffic to be transmitted and received to and from the sharing access point to the anchor link while switching of the shared access point to serve the connection destination is performed for the switching target link other than the anchor link, corresponding to the setting of the anchor link by the sharing access point.

7. A shared access point provided as one of a plurality of shared access points, the shared access point comprising:
a management unit configured to:
acquire, in a state in which each of a plurality of links from a terminal is wirelessly connected to one of the plurality of shared access points, setting information for an anchor link that is one of the plurality of links from a sharing access point, corresponding to a transmitting, by the terminal, of a handover request for requesting switching of a shared access point to serve a connection destination for one or more of the plurality of links, and
maintain the wireless connection with the terminal via the anchor link while the shared access point to serve as the connection destination is switched for a switching target link to be switched among the links other than the anchor link in a case in which the shared access point corresponds to a connection destination by the anchor link.

8. The shared access point according to claim 7, wherein, in a case in which the shared access point corresponds to the connection destination by the anchor link and the anchor link is the switching target link to be switched, the management unit is configured to cut off the wireless connection with the terminal via the anchor link on a basis of completion of switching of the shared access point to serve as the connection destination for all of the switching target links other than the anchor link.
